Europäisches Patentamt

European Patent Office

Office européen des brevets

(19)

(11) Veröffentlichungsnummer : **0 398 912 B1**

# (12) EUROPÄISCHE PATENTSCHRIFT

(45) Veröffentlichungstag der Patentschrift :
07.10.92 Patentblatt 92/41

(51) Int. Cl.$^5$ : **A01G 1/04**

(21) Anmeldenummer : 89901527.5

(22) Anmeldetag : 26.01.89

(86) Internationale Anmeldenummer :
PCT/DE89/00041

(87) Internationale Veröffentlichungsnummer :
WO 89/06900 10.08.89 Gazette 89/18

(54) CHAMPIGNONZUCHTBEHÄLTER.

(30) Priorität : 03.02.88 DE 8801294 U

(43) Veröffentlichungstag der Anmeldung :
28.11.90 Patentblatt 90/48

(45) Bekanntmachung des Hinweises auf die
Patenterteilung :
07.10.92 Patentblatt 92/41

(84) Benannte Vertragsstaaten :
AT BE CH DE FR GB IT LI LU NL

(56) Entgegenhaltungen :
DE-U- 8 007 842
FR-A- 2 567 358
US-A- 3 118 249
US-A- 4 422 375

(73) Patentinhaber : BECKER BEHÄLTER GMBH
Schiebelstrasse 11
W-6342 Haiger-Dillbrecht (DE)

(72) Erfinder : BECKER, Friedhold
Ginsterhain 6
W-6342 Haiger-Dillbrecht (DE)

(74) Vertreter : Bauer, Wulf, Dr.
Wolfgang-Müller-Strasse 12
W-5000 Köln 51 (Marienburg) (DE)

## Beschreibung

Die Erfindung bezieht sich auf einen Champignonzuchtbehälter nach dem Oberbegriff des Patentanspruchs 1.

Bei dem aus der DE-U-80 07 842 vorbekannten Champignonzuchtbehälter der eingangs genannten Art stehen die Beine deutlich gegenüber den Oberkanten der Wände vor. Sie behindern dadurch die Befüllung der Wanne mit Nährsubstrat, insbesondere bei Einsatz eines Schaufelladers, sie stören auch beim Entleeren der Wanne. Für die Stapelung des vorbekannten Champignonzuchtbehälters in zwei unterschliedlichen Stapelabständen sind zusätzliche, separate Abstandsteile vorgesehen, die als Verbindungsstangen bezeichnet werden. Werden sie zwischen zwei übereinander befindlichen Champignonzuchtbehältern angeordnet, so ist der Abstand zwischen diesen Champignonzuchtbehältern ausreichend groß, um Bearbeitungen durchführen und die Champignons manuell ernten zu können. Ohne die Verbindungsstangen werden die Champignonzuchtbehälter in kürzerem vertikalen Abstand gestapelt, dieser Stapelzustand ist für die Wärmebehandlung der mit Dünger- oder Körnerbrut gefüllten Zuchtbehälter vorteilhaft, denn durch die engere Stapelung wird der Platz im Wärmeofen oder in der Wärmekammer besser genutzt.

Aufgrund der zusätzlichen Verbindungsstangen ist eine rein maschinelle Stapelung (z. B. mit einem Gabelstapler) der Champignonzuchtkästen nicht möglich, da stets mindestens ein Helfer die Verbindungsstange, von denen pro Champignonzuchtkasten zwei benötigt werden, aufsetzen bzw. entfernen muß. Zusätzlich wird ein Stapel von Champignonzuchtbehältern durch die zwischengefügten Verbindungsstangen labil, es treten aufgrund der größeren Anzahl von Berührungsflächen stärkere Abweichungen von der vertikalen Stapelung auf.

Schließlich ist bei dem vorbekannten Champignonzuchtbehälter nachteilig, daß sich bei dem untersten Champignonzuchtbehälter eines Stapels kein Freiraum zwischen dem Boden seiner Wanne und einem Untergrund befindet, weil die Beine unten bündig mit dem Boden abschließen. Dies ist für den maschinellen Transport der Champignonzuchtbehälter ungünstig, da Gabelstapler mit ihren Zinken nicht untergreifen können. Es ist aber auch für die Aufzucht der Champignonkultur ungünstig, wenn sich der Boden des untersten Champignonzuchtbehälters in unmittelbaren Kontakt mit dem Untergrund befindet. Dieser unmittelbare Kontakt führt zu einem Feuchtigkeitsstau unterhalb des Bodens.

Aus der US-A-31 18 249 sind längliche Champignonzuchtbehälter bekannt, die in speziell vorgesehenen Gestellen gelagert werden. Ihre Seitenwände bilden Schienen für ein Bearbeitungswerkzeug. Die einzelnen Champignonzuchtbehälter können nicht maschinell entnommen werden, sie haben keine Beine, unterschiedliche Stapelhöhen sind nicht vorgesehen.

Aus der FR-A-25 67 358 ist ein Champignonzuchtbehälter bekannt, der aus einer metallenen Tragstruktur und einer aus Kunststoff hergestellten Wanne besteht. Unterschiedliche Stapelhöhen und Beine, die länger als die Höhe der Wände sind, sind nicht vorgesehen.

Schließlich sind aus der US-A-31 18 249 stapelbare Champignonzuchtbehälter bekannt, deren in den Wannenecken angeordnete, aus L-Profilen hergestellte Beine nicht-nur gegenüber der Oberkante der Wände nach oben vorstehen, sondern auch nach unten vorragen. Zwei Stapelzustände in unterschiedlichen Abständen der Champignonzuchtbehälter sind vorgesehen.

Ausgehend von dem Champignonzuchtbehälter der eingangs genannten Art liegt der Erfindung die Aufgabe zugrunde, diesen Champignonzuchtbehälter dahingehend weiterzubilden, daß-er besser für den Einsatz maschineller Bearbeitungsgeräte der Champignonzucht verwendbar ist und sich sicherer stapeln läßt.

Diese Aufgabe wird ausgehend von dem vorbekannten Champignonzuchtbehälter gelöst durch die Merkmale des Patentanspruchs 1.

Dieser Champignonzuchtbehälter ist insbesondere für maschinelle Bearbeitung geeignet. Die Champignonzuchtbehälter können unmittelbar und ohne Zwischenlage von Hilfsmitteln übereinander gestapelt werden, wobei solide, standfeste Stapel auch bei einer Mehrzahl von Etagen erreicht werden und eine hohe Maßhaltigkeit erzielt wird, so daß die Stapelvorgänge einfacher ablaufen und ein Reparaturaufwand praktisch entfällt. Die Zuchtbehälter können problemlos auch im gefüllten Zustand mit bekannten Hebegeräten, beispielsweise Gabelstaplern, transportiert werden, ohne daß die Gefahr besteht, daß die Behälter mechanisch überlastet oder beschädigt werden. Insgesamt ergibt sich der Vorteil, daß die Zuchtbehälter relativ lang und breit ausgebildet werden können, beispielsweise 2 bis 3 m lang und 1 bis 2 m breit.

Die Hauptbeine sind so lang ausgebildet, daß bei einer Stapelung mittels nur der Hauptbeine ein für die Aufzucht, Bearbeitung, den Luftzutritt usw. ausreichender vertikaler Abstand übereinander angeordneter Zuchtbehälter verbleibt. Der bestand muß insbesondere so bemessen sein, daß man in jeder einzelnen Etage die Champignons manuell ernten kann. Bei Stapelung unter Zuhilfenahme der Zusatzbeine wird ein demgegenüber wesentlich kürzerer vertikaler Abstand zwischen den übereinander befindlichen Wannen erzielt.

Die Zusatzbeine sind wesentlich kürzer als die Hauptbeine, ihre Länge ist frei wählbar, sie liegt beispielsweise zwischen 20 und 50 % der Länge der Hauptbeine. Je kürzer die Zusatzbeine sind, desto kürzer ist der lichte Abstand zwischen den Wannen aufeinandergestapelter Behälter und umso mehr Platz wird während der Wärmebehandlung gespart.

Auch das Bodenblech ist aus einem steifen Kunststoff oder einem Metall, vorzugsweise aus Stahlblech, gefertigt, es hat Lochungen, deren aufsummierte Gesamtfläche etwa 5 bis 15, vorzugsweise 8 % der Oberfläche des Bodens ausmacht. Dadurch kann ausreichend Luft von unten an die Dünger-, Körner- oder anderweitige Brut gelangen.

Vorzugsweise springen an den Stirnflächen und seitlich außerhalb der Beine Führungsbleche vor, wobei pro Behälter zwei diagonal verteilte Führungsbleche ausreichen. Sie vereinfachen das stirnseitige Aneinandersetzen der Behälter, indem sie beim Heranschieben ein fluchtendes Ausrichten der Behälter erzwingen.

In einer bevorzugten Ausbildung ist der aus Stahlblech und Vierkantmaterial zusammengeschweißte oder zusammengesteckte Zuchtbehälter verzinkt, um seine Lebensdauer zu erhöhen.

Weitere Vorteile und Merkmale der Erfindung ergeben sich aus den übrigen Ansprüchen sowie der nun folgenden Beschreibung eines nicht einschränkenden Ausführungsbeispiels des Champignonzuchtbehälters, dieses Beispiel wird im folgenden näher erläutert und unter Bezugnahme auf die Zeichnung beschrieben. In dieser Zeigen:

Fig. 1 Eine Seitenansicht des Behälters mit darauf angedeutetem mechanischem Bearbeitungswerkzeug,

Fig. 2 eine Draufsicht auf den Behälter und den Bearbeitungswagen,

Fig. 3 eine Stirnansicht des Behälters und des Wagens,

Fig. 4 eine perspektivische Darstellung eines Eckbereichs des Behälters,

Fig. 5 eine Seitenansicht entsprechend Fig. 1 zweier im engen Abstand aufeinander gestapelter Behälter und

Fig. 6 eine Darstellung entsprechend Fig. 5 von vier Behältern, die im weiten Abstand aufeinander gestapelt sind.

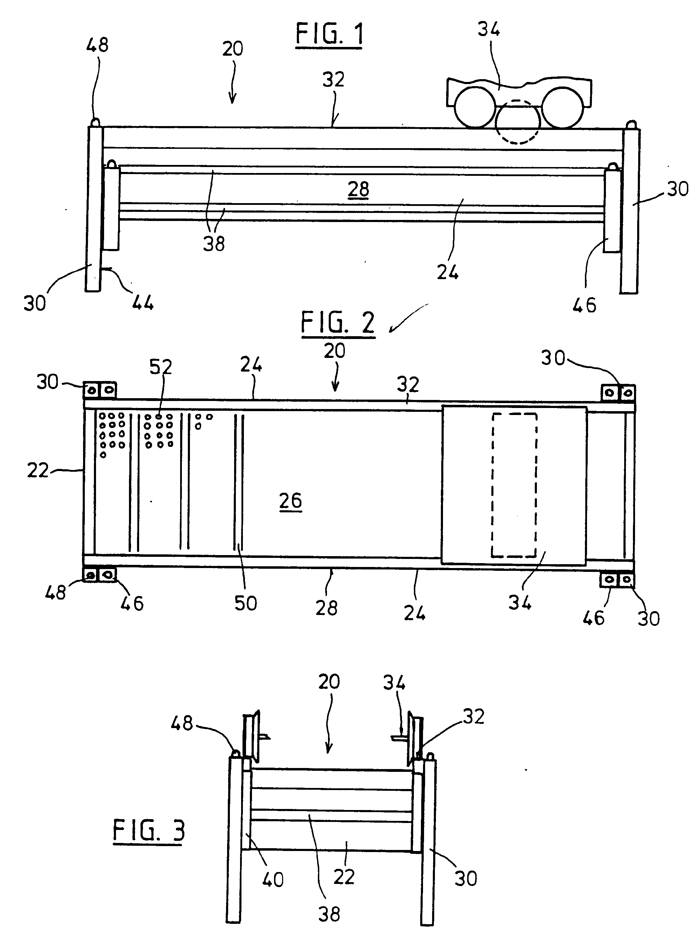

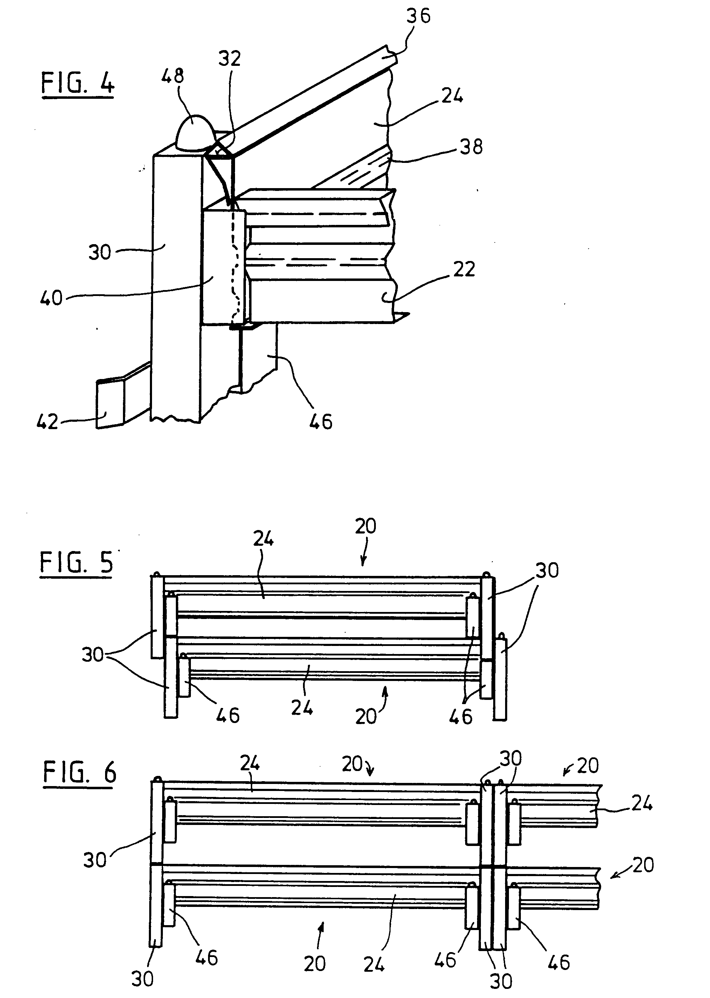

Der aus den Figuren 1 bis 4 ersichtliche Champignonzuchtbehälter hat eine quaderförmige, nach oben offene Wanne 20, die aus zwei identischen Stirnwänden 22, zwei ebenfalls untereinander identischen Seitenwänden 24 und einem Boden 26 gebildet ist. An der Außenseite 28 jeder der beiden Seitenwände 24 sind jeweils zwei Beine, im folgenden Hauptbeine 30 genannt, so angeschweißt, daß sie stirnseitig mit der Außenfläche der Stirnwände 22 fluchten. Sie sind aus Vierkantrohr sechs mal sechs Zentimeter gefertigt und etwa 50 cm lang. Mit ihrem oberen Endbereich schließen sie bündig mit der Oberkante der Seitenwände 24 ab. Diese Seitenwände 24 sind 21 cm hoch, ihre Länge entspricht der Gesamtlänge des Behälters, die 285 cm beträgt. Die Stirnwände 22 sind dagegen nur 15 cm hoch, da ihre Unterkante auf derselben Höhe wie die Unterkante der Seitenwände 24 liegt, stehen sie oben ca. 6 cm tiefer als die Seitenwände 24, dies ist aus Figur 3 zu ersehen. Damit stehen die Hauptbeine 30 etwa 33 cm nach unten frei vor, dieses Maß ist zugleich der freie Abstand zwischen unter Benutzung der Hauptbeine 30 aufeinandergestapelten Behältern, siehe Fig. 6.

Einzelheiten der Konstruktion ergeben sich aus Fig. 4. Die Wände 22, 24 und der Boden 26 sind aus Stahlblech gefertigt, Fig. 4 zeigt die Konstruktion beider Wände 22, 24. Jede Seitenwand 24 ist an ihrer Oberseite 32 unter Ausbildung eines etwa 3 cm breiten, waagerechten Streifens doppelt abgewinkelt und mit ihrem freien Ende schräg zurückgekrümmt, wie aus Fig. 4 ersichtlich ist. Die Oberseite 32, die bündig ist mit der Oberkante des Hauptbeines 30, kann als Schiene für die Räder eines Bearbeitungswagens 34 (siehe Figuren 1 bis 3) eingesetzt werden, im gezeigten Ausführungsbeispiel ist jedoch auf die Oberseite 32 noch ein L-Profil 36 aufgeschweißt, das ein gleichschenkliges Dach bildet. Wenn die Oberseite 32 unmittelbar als Schiene verwendet würde, könnte sich auf ihr Dreck ansammeln und beim Überrollen festigen, dies ist bei den schräg verlaufenden Außenflächen des L-Profils 36 nicht möglich, dort hingelangendes Material, beispielsweise aus der Brut, rutscht ab, so daß es nicht auf den Abrollwegen der Räder bleibt und demgemäß auch die Abrollbewegung nicht stören kann.

In ihrem Mittelbereich ist jede Seitenwand 24 zweimal gesickt (Sicke 38), unten ist sie nach innen einmal abgewinkelt, wodurch eine randseitige Auflagefläche für den Boden 26 geschaffen wird.

Die Stirnwände 22 sind im Prinzip ebenso ausgebildet, auch an ihrer Oberseite befindet sich die zweifache Abwinklung, sie haben jedoch nur eine Sicke und sind - wie schon beschrieben - kürzer.

Die Seitenwand 24 ist an der Außenkante ihrer Oberseite 32 unmittelbar mit dem Hauptbein 30 verschweißt, der darunter befindliche Freiraum wird durch ein U-Profil 40 überbrückt, das - wie dargestellt - die Verbindung zwischen Seitenwand 24 und Hauptbein 30 sowie auch die Verbindung zur Stirnwand 22 sichert, die Verbindungen erfolgen im Ausführungsführungsbeispiel durch Schweißen, es ist aber auch eine Steckverbindung möglich.

Fig. 4 zeigt noch ein Führungsblech 42, an jeder Stirnseite ist ein derartiges Führungsblech vorgesehen, die beiden Führungsbleche 42 jedes Behälters sind diagonal versetzt. Sie sichern beim stirnseitigen Aneinanderfügen zweier Behälter ein sauberes Ausrichten, so daß die beiden Schienen der Behälter fluchten.

Der in den Figuren 1 bis 3 dargestellte Wagen 34 soll nur als Beispiel für die Darstellung eines mechanischen Bearbeitungswerkzeuges dienen. Der Wagen 34 kann auf der Oberseite 32 bzw. den durch das L-Profil 36 gebildeten Schienen abrollen, er kann dabei von einem Behälter zum stirnseitig angesetzten nächsten Behälter gefahren werden, er kann die gesamte freie Innenfläche der Wanne 20 bestreichen. Seine Stromversorgung, Steuerung, ein eventueller mechanischer Antrieb usw. erfolgt von einer Stirnseite (am Ende der Reihe der stirnseitig aneinander gestellten Behälter). Der Wagen 34 ist schmaler als der lichte Abstand der Hauptbeine 30, so daß auch bei gestapelten Behältern die Beine die Durchfahrt des Wagens 34 nicht behindern (siehe Fig. 2).

An den beiden einander zugewandten Beinflächen 44 der beiden Beine 30 jeder Seitenwand 24 sind Zusatzbeine 46 angeschweißt. Sie sind wesentlich kürzer als die Hauptbeine 30, beispielsweise nur 30 % so lang wie letztere. Sie sind ebenfalls mit der Seitenwand 24 verschweißt. Sie sind so angeordnet, daß die halbe Höhe beider Beine 30, 46 auf gleichem Niveau liegt, anders ausgedrückt ist der Abstand ihres oberen Endbereichs vom oberen Endbereich der Hauptbeine 30 genauso groß wie der Abstand ihres unteren Endes vom unteren Ende der Hauptbeine 30. Aufgrund der beschriebenen Konstruktion haben die Zusatzbeine 46 in Längsrichtung gesehen einen kürzeren Abstand als die Hauptbeine 30 (siehe Fig. 1), dagegen ist der in Querrichtung gemessene Abstand aller vier Beinpaare, wie Fig. 2 zeigt, gleich.

Auch die Zusatzbeine 46 sind aus sechs mal sechs Zentimeter Vierkantrohr gefertigt und unten offen. Alle Beine 30, 46 haben auf ihrer Oberseite einen Stapeldorn 48, der dem lichten Innenprofil angepaßt ist.

Fig. 5 zeigt eine Stapelung mit kleinem Abstand zwischen den Wannen 20. Bei dieser Stapelung greift der Stapeldorn 48 des linken Hauptbeinpaares 30 des unteren Behälters in den unteren Endbereich der linken Zusatzbeine 46 des oberen Behälters. Im rechten Bereich liegt jedoch eine andere Anordnung vor. Hier greift der Stapeldom 48 jedes der beiden rechten Zusatzbeine 46 in den unteren Endbereich eines der beiden rechten Hauptbeine 30. Die Zusatzbeine 46 des oberen Behälters werden auf der rechten Seite nicht benutzt, die Zusatzbeine 46 des unteren Behälters werden auf der linken Seite nicht benutzt. Beide Behälter sind um die Breite eines Beines 30, 46 in Längsrichtung gegeneinander versetzt, wie dies aus der Fig. 5 ersichtlich ist. Ein dritter Behälter kann wieder vertikal fluchtend mit dem ersten, unteren Behälter auf den zweiten Behälter aufgestapelt werden, man erkennt dann die Gesetzmäßigkeit, daß bei der Stapelung gemäß Fig. 5 alternierend ein Zusatzbein 46 und ein Hauptbein 30 aufeinander gesteckt sind. Stattdessen kann natürlich auch die Stapelung unter erneutem Schrägversatz nach links erfolgen. Die Stapelung gemäß Fig. 5 liegt während der Wärmebehandlung vor.

Fig. 6 zeigt die vertikal weitere Normalstapelung, bei ihr sind jeweils die Hauptbeine 30 eines oberen Behälters auf die Hauptbeine 30 des unteren Behälters aufgesetzt. Dadurch entsteht auch in Längsrichtung kein Versatz. Die Zusatzbeine 46 sind ohne Funktion. Der vertikale Zwischenraum zwischen aufeinander gestapelten Behältern reicht für den Durchlauf des Wagens 34 und für manuelle Ernte aus.

Der aus einem Stahlblech hergestellte Boden 26 hat in gleichmäßigen Abständen in Querrichtung verlaufende Sicken 50 zur mechanischen Aussteifung, zwischen diesen Sicken 50 befinden sich jeweils Felder mit Löchern 52. Die aufsummierte Gesamtfläche aller Löcher 52 beträgt 8 % Gesamtfläche des Bodens 26. Bei der zweifachen Abwinklung der Oberkante der Wände 22, 24 sind die Wände 22, 24 innen glatt und befindet sich das freie Ende des Wandzuschnitts außen (siehe Fig. 4). Die Stirnwände 22 Liegen zwischen den Seitenwänden 24, siehe Fig. 2 bis 4.

## Patentansprüche

1. Champignonzuchtbehälter mit einer quaderförmigen, nach oben offenen Wanne (20) für die Aufnahme von Nährboden und Kultur, die aus zwei Stirnwänden (22), zwei Seitenwänden (24) und einem Boden (26) besteht, und mit vier Beinen (30), die an Eckbereichen der Wanne (20) angeordnet sind, an der Außenseite der Seitenwände (24) befestigt sind und die nicht gegenüber der Außenseite der Stirnwände (22) vorstehen, wobei die Oberkante der beiden Seitenwände (24) als Schiene ausgebildet ist, die sich über die gesamte Länge des Behälters erstreckt und die Oberkante der Stirnwände (22) unterhalb dieser Schienen liegt, dadurch gekennzeichnet, daß die Beine (30) mit ihrem oberen Endbereich bündig mit der Oberkante der Seitenwände (24) abschließen und daß zusätzlich zu den vier Beinen (30) - im folgenden Hauptbeine (30) genannt - Zusatzbeine (46) vorgesehen sind, die wesentlich kürzer als die Hauptbeine (30) sind, für eine Stapelung mit kürzerem vertikalen Abstand, und daß an einander zugewandten Beinflächen (44) der Hauptbeine (30) der selben Seitenwand (24) je ein Zusatzbein (46) befestigt ist, dessen oberer Endbereich gleichweit vom oberen Endbereich des Hauptbeins (30) entfernt ist wie der untere Endbereich vom unteren Endbereich des Hauptbeins (30) entfernt ist.

**2.** Champignonzuchtbehälter nach Anspruch 1, dadurch gekennzeichnet, daß die Länge der Zusatzbeine (46) 20 bis 35 % der Länge der Hauptbeine (30) beträgt.

**3.** Champignonzuchtbehälter nach Anspruch 1 oder 2, dadurch gekennzeichnet, daß auf der Oberseite (32) der beiden Seitenwände (24) jeweils ein L-Profil (36) zur Ausbildung der Schiene aufgesetzt ist.

**4.** Champignonzuchtbehälter nach einem der Ansprüche 1 bis 3, dadurch gekennzeichnet, daß die Beine (30, 46) aus Hohlprofilen gefertigt sind und sich auf ihrem oberen Endbereich jeweils ein Stapeldom (48) befindet.

**5.** Champignonzuchtbehälter nach einem der Ansprüche 1 bis 4, gekennzeichnet durch einen mit Bearbeitungswerkzeugen versehenen Wagen (34), der auf den Schienen abrollende Räder hat.

**6.** Champignonzuchtbehälter nach Anspruch 5, dadurch gekennzeichnet, daß der Boden (26) ein mit mehreren in Querrichtung verlaufenden Sicken (50) versehenes Blech ist, in dem Löcher (52) vorgesehen sind, deren aufsummierte Lochfläche zwischen 5 und 15 % der Gesamtfläche des Bodens (26) beträgt.

**7.** Champignonzuchtbehälter nach einem der Ansprüche 1 bis 6, dadurch gekennzeichnet, daß die Oberseite der Stirnwände (22) 3 bis 10 cm, vorzugsweise 5 bis 6 cm unterhalb der Oberseite (32) der Seitenwände (24) liegt.

**8.** Champignonzuchtbehälter nach einem der Ansprüche 1 bis 7, dadurch gekennzeichnet, daß die beiden Stirnwände (22) zwischen den Seitenwänden (24) angeordnet sind.

**9.** Champignonzuchtbehälter nach einem der Ansprüche 1 bis 8, dadurch gekennzeichnet, daß er aus Metall oder einem entsprechend festen Kunststoff, vorzugsweise aus Stahlblech und Vierkantprofilen, die verzinkt sind, gefertigt ist.

## Claims

**1.** Container for cultivating mushrooms with a right-parallelipiped trough (20) which is open at the top to take nutritive soil and culture, said container consists of two front walls (22), two side walls (24) and a floor (26) and four legs (30) which are arranged in the corners of the trough (20), fixed to the outside of the side walls (24) and which do not protrude over the outside of the two side walls (24), the top edge of both side walls (24) is designed as a rail extending along the entire length of the container, the top edge of the front walls (22) is located beneath these rails characterised by the fact that the top end of the legs (30) are flush with the top edge of the side walls (24) and that, in addition to the four legs (30), hereinafter referred to as main legs (30), additional legs (46) are foreseen which are considerably shorter than the main legs (30) for stacks with a shorter vertical distance and furthermore characterised by the fact that an additional leg (46) is attached to facing leg areas (44) of the main legs (30) of the same side wall (24), whereby the top end of the additional leg is the same distance away from the top of the main leg (30) as the bottom end of the additional leg is from the bottom end of the main leg (30).

**2.** Container for cultivating mushrooms in accordance with claim 1 characterised by the fact that the length of the additional legs (46) is 20 to 35 per cent of the length of the main legs (30).

**3.** Container for cultivating mushrooms in accordance with claim 1 or 2 characterised by the fact that an L-section (36) is positioned on the top side (32) of each of the two side walls (24) to create the rail.

**4.** Container for cultivating mushrooms in accordance with one of the claims 1 to 3 characterised by the fact that the legs (30, 46) are made of hollow sections and by the fact that there is a stacking stud (48) positioned on their top end.

**5.** Container for cultivating mushrooms in accordance with one of the claims 1 to 4 characterised by a car (34) equipped with cultivating tools with wheels travelling along the rails.

**6.** Container for cultivating mushrooms in accordance with claim 5 characterised by the fact that the floor (26) is a metal sheet with several beads (50) running in transverse direction in which perforations (52) are foreseen which account for between 5 and 15 per cent of the entire floor area (26).

7. Container for cultivating mushrooms in accordance with one of the claims 1 to 6 characterised by the fact that the top side of the front walls (22) is 3 to 10 cm, and preferably 5 to 6 cm, below the top side (32) of the side walls (24).

8. Container for cultivating mushrooms in accordance with one of the claims 1 to 7 characterised by the fact that the two front walls (22) are arranged between the side walls (24).

9. Container for cultivating mushrooms in accordance with one of the claims 1 to 8 characterised by the fact that it is made of metal or of a correspondingly rigid plastic, preferably of steel sheet and square sections, which are galvanised.

**Revendications**

1. Récipient pour la culture de champignons comportant un bac parallélépipédique (20), ouvert vers le haut, servant à recevoir une couche nourricière et une culture et qui est constitué par deux parois frontales (22), deux parois latérales (24) et un fond (26), et comportant quatre pieds (30), qui sont disposés dans les zones d'angle du bac (1), sont fixés sur la face extérieure des parois latérales (24) et ne font pas saillie au-delà de la face extérieure des parois frontales (22), et dans lequel le bord supérieur des deux parois latérales (24) est réalisé sous la forme d'un rail qui s'étend sur toute la longueur du récipient, tandis que le bord supérieur des parois frontales (22) est situé au-dessous de ces rails, caractérisé en ce que les pieds (30) se terminent, par leur partie d'extrémité supérieure, de niveau avec le bord supérieur des parois latérales (24) et qu'en plus des quatre pieds (30) -désignés ci-après sous le terme de pieds principaux (30)-, il est prévu des pieds supplémentaires (46) qui sont nettement plus courts que les pieds principaux (30), pour permettre un empilage avec une distance de séparation verticale plus courte, et que sur les surfaces (44), qui se font face, des pieds principaux (30) de la même paroi latérale (24) sont fixés des pieds supplémentaires respectifs (46), dont la partie d'extrémité supérieure est située à une même distance de la partie d'extrémité supérieure du pied principal (30) que celle séparant la partie d'extrémité inférieure du pied supplémentaire, de la partie d'extrémité inférieure du pied principal (30).

2. Récipient pour la culture de champignons selon la revendication 1, caractérisé en ce que la longueur des pieds supplémentaires (46) est égale à 20 à 35 % de la longueur des pieds principaux (30).

3. Récipient pour la culture de champignons selon la revendication 1 ou 2, caractérisé en ce que sur la face supérieure (32) des deux parois latérales (24) est monté respectivement un profilé en L (36) servant à former le rail.

4. Récipient pour la culture de champignons selon l'une des revendications 1 à 3, caractérisé en ce que les pieds (30,46) sont formés de profilés creux et qu'une broche respective d'empilage (48) est située sur leur partie d'extrémité supérieure.

5. Récipient pour la culture de champignons selon l'une des revendications 1 à 4, caractérisé par un chariot (34), qui est équipé d'outils de traitement et possède des galets roulant sur les rails.

6 Récipient pour la culture de champignons selon la revendication 5, caractérisé en ce que le fond (26) est une tôle qui est équipée de plusieurs moulures (50) qui s'étendent dans la direction transversale et dans lesquelles sont ménagés des trous (52), dont la totalité des surfaces est comprise entre 5 et 15 % de la surface totale du fond (26).

7. Récipient pour la culture de champignons selon l'une des revendications 1 à 6, caractérisé en ce que la face supérieure des parois frontales (22) se situe entre 3 et 10 cm et de préférence entre 5 et 6 cm au-dessous de la face supérieure (32) des parois latérales (24).

8. Récipient pour la culture de champignons selon l'une des revendications 1 à 7, caractérisée en ce que les deux parois frontales (22) sont disposées entre les parois latérales (24).

9. Récipient pour la culture de champignons selon l'une des revendications 1 à 8, caractérisé en ce qu'il est réalisé en un métal ou en une matière plastique possédant une rigidité correspondante, de préférence en une tôle d'acier et par des profilés à section carrée, qui sont galvanisés.

FIG. 1

FIG. 2

FIG. 3

FIG. 4

FIG. 5

FIG. 6